# EUROPEAN PATENT APPLICATION

(11) **EP 2 759 554 A1**
(43) Date of publication of application: **30.07.2014**
(21) Application number: 13152371.4
(22) Date of filing: 23.01.2013
(51) Int. Cl.: C08F 210/06, C08F 210/16, C08F 210/14, C08F 4/659

(54) **Process for producing olefin / 3-methyl-1-butene copolymers**

(71) Applicant: TOTAL RESEARCH & TECHNOLOGY FELUY, 7181 Seneffe (BE)
(72) Inventor: Wassenaar, Jeroen, B - 1040 Bruxelles (BE); Slawinski, Martine, B-1400 Nivelles (BE)
(74) Representative: Leyder, Francis

(57) **Abstract**

The present invention relates to a process for copolymerizing a monomer selected from C₂ to C₁₀ olefin with 3-methyl-1-butene. High incorporation rate of 3-methyl-1-butene in the copolymer is obtained in particular at low content of 3-methyl-1-butene in the feed. In particular, catalysts of formula (I) or (II) are suitable for the production of such copolymer:

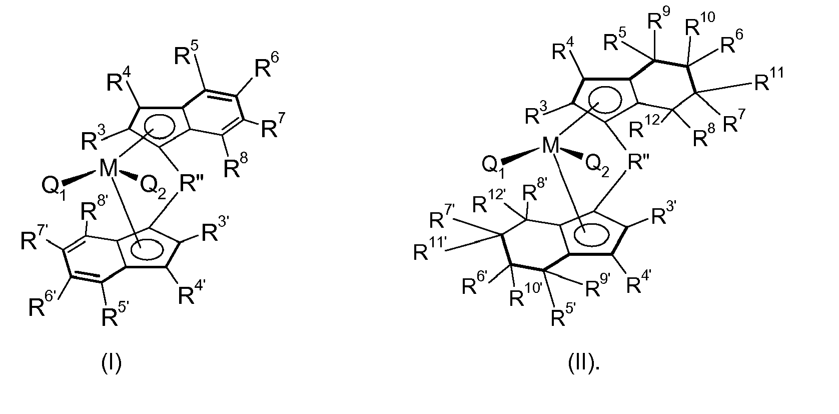

## Description

### Field of the invention

The invention relates to the copolymerization of C₂ to C₁₀ olefin with 3-methyl-1-butene. The copolymerization process is performed in presence of a catalyst system comprising one or more metallocene compounds.

### Background of the invention

The use of a comonomer in the production of polyolefins-based materials is necessary to obtain the required flexibility and impact resistance in most of their applications. Such copolymers are usually made of ethylene or propylene moieties in which a comonomer is incorporated. Generally employed comonomers are linear alpha olefins such as 1-butene or 1-hexene. The production of such monomers is, however, challenging due to the lack of selectivity obtained in the oligomerization processes for producing such linear alpha olefins. Therefore, alpha olefins are generally expensive and their availability and price is subject to continuous fluctuations. It would thus be desirable to employ other olefins that are not derived from ethylene oligomerization processes as comonomer.

3-methyl-1-butene (3MB1) represents such an olefin that may be derived from crude oil refining as it is present in the C5 fraction of the effluent of a fluid catalytic cracking unit. 3-methyl-1-butene is, however, a sterically encumbered olefin. Copolymerization of 3-methyl-1-butene is known in the art but its degree of incorporation into polyethylene and polypropylene is very low. Joubert and co-workers (Macromolecular Symposia 2002, 178, 69-79) reported that 3-methyl-1-butene has a reactivity of less than 10 % than the one of 4-methyl-1-pentene, which is already less reactive than linear olefins like 1-butene or 1-hexene, in ethylene copolymerization in presence of a Ziegler catalyst.

Kaminsky and co-workers disclose homogeneous metallocene catalysts for the copolymerization of ethylene or propylene with 3-methyl-1-butene (Macromolecular Symposia 2001, 173, 211-225; Macromolecules 2007, 40, 4130-4137). The most efficient catalyst, rac-[Me₂C(Ind)₂]ZrCl₂ activated by MAO, provides, however, low incorporation rates of 3-methyl-1-butene in the polyethylene matrix in particular at low content of 3-methyl-1-butene in the feed. Indeed, only 2.4 mol% was incorporated into the resulting polyethylene at a molar fraction of 3-methyl-1-butene in the feed of 40 mol% yielding an incorporation efficiency of 6% wherein the incorporation efficiency is defined as [the ratio between the molar percentage of 3-methyl-1-butene incorporated in the polymer and the content of 3-methyl-1-butene in the feed, expressed in mol%]*100. US 8,202,293 and US 8,202,959 both disclose metallocene catalysts, e.g. Me₂C(Cp)(Flu)ZrCl₂, Me₂Cbis(indenyl)ZrCl₂, Ph₂Si(Indenyl)(OctHFlu)ZrCl₂ and Me₂Si(Me₄Cp)(N^{tert}Bu)TiCl₂, for copolymerization of 3-methyl-1-butene with ethylene or propylene.

WO2010/084047 and US2012/0022223 disclose the use of heterogeneous single-site catalysts based on (*n*-Bu-Cp)₂HfCl₂ in both slurry and gas-phase copolymerization processes of ethylene and 3-methyl-1-butene. This catalyst still provides low incorporation of 3-methyl-1-butene in ethylene. For example, it incorporates 1.4 wt% 3-methyl-1-butene into polyethylene (corresponding to 0.6 mol.%) at a content of 3-methyl-1-butene in the total feed of 26% (WO2010/084047, example 1, run 1), yielding an incorporation efficiency value of only 2.3%.

Low incorporation efficiencies as experienced in the foregoing methods therefore need to recycle large amounts of this comonomer, which is both cost and energy inefficient.

There is thus a need for olefin copolymerization catalysts that incorporate 3-methyl-1-butene efficiently. This invention addresses the problem of the state of the art by providing catalysts and a process based on these catalysts that are able to efficiently incorporate 3-methyl-1-butene in polyolefin copolymers.

It is an object of the invention to provide a process for the copolymerization of C₂-C₁₀ olefin with 3-methyl-1-butene as comonomer whereby the copolymer obtained has higher content of 3-methyl-1-butene even at low contents of 3-methyl-1-butene in the feed.

### Summary of the invention

The invention is defined by the independent claims. The dependent claims define advantageous embodiments.

According to the invention, there is provided a process for producing a copolymer comprising contacting into a reactor:
(A) a monomer selected from the group consisting of C₂ to C₁₀ olefin, and
(B) 1 to 50 mol% of 3-methyl-1-butene calculated on the basis of the total amount of component (A) and (B) in the feed, in presence of,
(C) a catalyst system comprising:
   (a) one or more metallocene compound of formula (I) or (II): 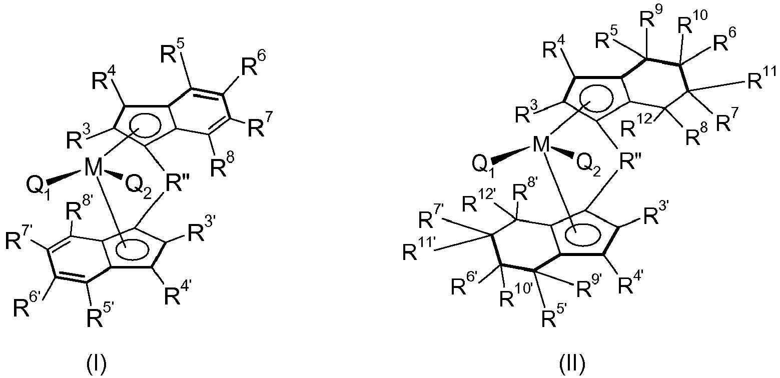 wherein:
      M is a group IV transition metal, preferably zirconium, hafnium or titanium;
      Q¹ and Q² are identical or different and are independently selected from the group consisting of hydrogen, halogen, C₁-C₁₀ alkyl group, C₆-C₂₀ aryl group, an anionic ligand or a neutral ligand capable of coordination by a lone pair of electrons;
      R" is of formula -[Z(R¹)(R²)]ₙ-
      n is an integer between 1 and 5;
      Z is a carbon, silicon, germanium or tin atom;
      R¹ and R² are identical or different and are independently selected from the group consisting of hydrogen, C₁-C₃₀ alkyl groups optionally substituted by one or more substituents, C₆-C₄₀ aryl groups optionally substituted by one or more substituents, or R¹ and R² together with the atom Z to which they are attached can form a three- to thirty-membered ring optionally substituted by one or more substituents;
      R³ to R¹² and R^{3'} to R^{12'} are identical or different and are independently selected from the group consisting of hydrogen, C₁-C₃₀ alkyl groups optionally substituted by one or more substituents, C₆-C₄₀ aryl groups optionally substituted by one or more substituents, or two of the substituents R³ to R¹² or R^{3'} to R^{12'} attached to a carbon atom positioned vicinal to each other respectively, form with the carbon atom to which they are attached a cycloalkyl, cycloalkenyl or aryl group optionally substituted by one or more substituents, with the proviso that in formula (I) R³ to R⁸ and R^{3'} to R^{8'} are not simultaneously hydrogen when Z is a carbon atom and n is 1; and that in formula (I) R³ and R⁴ as well as R^{3'} and R^{4'} together with the carbon atom to which they are attached do not form a cycloalkenyl group or an aryl group when Z is a silicon or carbon atom;
   (b) at least one activating agent having an alkylating or ionising action; and
   (c) optionally a scavenger selected from the group consisting of alkyl aluminium represented by formula AlR*ₙX₃₋ₙ wherein R* is an alkyl having from 1 to 20 carbon atoms, n is an integer between 0 and 3 and X is a halogen; or aluminoxane.

The present catalyst system allows increasing the content of 3-methyl-1-butene in the copolymer so produced even at low content of 3-methyl-1-butene in the feed. The copolymer produced has high content of short chain branching, thus decreasing density thereof. The process according to the present invention provides copolymers of C₂ to C₁₀ olefin with 3-methyl-1-butene having improved flexibility, impact resistance, optical properties such as transparency, or stress crack resistance.

The incorporation efficiency, defined as [the ratio between the molar percentage of 3-methyl-1-butene incorporated in the polymer and the content of 3-methyl-1-butene in the feed, expressed in mol%]*100, is higher than 7% when the C₂ to C₁₀ olefin is ethylene or higher than 5% when the C₂ to C₁₀ olefin is propylene. Compared with the prior art, which provides, at low 3-methyl-1-butene content in the feed, catalysts having incorporation efficiency lower than 6% for ethylene/3-methyl-1-butene copolymers or incorporation efficiency lower than 2.5% for propylene/3-methyl-1-butene copolymers, the present catalyst system is substantially more efficient.

Furthermore, the catalyst system according to the present invention allows controlling the tacticity of copolymer produced when the monomer is propylene. The present invention provides a versatile catalyst system which can be suitable to tune the melting temperature of the copolymer produced while maintaining high degree of tacticity, thus providing valuable copolymers in terms of mechanical properties.

Preferably, the catalyst system according to the present invention further comprises an inorganic support.

In a preferred embodiment, the activating agent is selected from alkyl aluminium, alumoxanes and boron-containing compounds.

In a preferred embodiment, prepolymerization may be performed at a temperature lower than the polymerization temperature. Said prepolymerization may be performed at a 3-methyl-1-butene concentration lower than the one used during the polymerization step.

In a second aspect of the present invention, a copolymer of C₂ to C₁₀ olefin with 3-methyl-1-butene obtained by the process defined above is provided. Preferably, said copolymer incorporates from 0.1 to 20 mol% of 3-methyl-1-butene. This is obtained at a content of 3-methyl-1-butene of 1 to 50 mol% calculated on the basis of the total amount of component C₂ to C₁₀ olefin and 3-methyl-1-butene in the feed.

### Short description of the drawings

- Fig. 1: represents catalysts 1 or 2 according to the present invention and comparative catalyst 3.
- Fig. 2: shows a graph representing the content of 3-methyl-1-butene (mol%) incorporated in ethylene as a function of the content of 3-methyl-1-butene in the feed (mol%) in presence of catalysts 1 to 3 of Figure 1.
- Fig. 3: shows a graph representing the content of 3-methyl-1-butene (mol%) incorporated in propylene as a function of the content of 3-methyl-1-butene in the feed (mol%) in presence of catalysts 1 and 3 of Figure 1.
- Fig. 4: shows the influence of the content of 3-methyl-1-butene (mol%) incorporated in polyethylene or polypropylene on the melting point.
- Fig. 5: shows the influence of the content of 3-methyl-1-butene (mol%) incorporated in polyethylene on the density.
- Fig. 6: shows a Janzen-Colby plot of log zero shear viscosity (η₀) versus log Mw of ethylene/3-methyl-1-butene copolymer samples prepared with catalyst 1 as illustrated in Figure 1.

### Detailed description of the invention

As used herein, the term "alkyl" by itself or as part of another substituent refers to a hydrocarbyl radical of formula CₙH₂ₙ₊₁ wherein n is a number greater than or equal to 1. Generally, alkyl groups of the present invention comprise from 1 to 30 carbon atoms, preferably from 1 to 20 carbon atoms, more preferably from 1 to 10 carbon atoms. The term "alkyl" encompasses linear or branched alkyl. The term "alkyl" may encompass alkyl groups substituted or not by one or more substituents. When a subscript is used herein following a carbon atom, the subscript refers to the number of carbon atoms that the named group may contain. Thus, for example, C₁-C₁₀ alkyl means an alkyl of one to ten carbon atoms. For example, the "C₁-C₁₀ alkyl" refers but is not limited to methyl, ethyl, n-propyl, i-propyl, n-butyl, i-butyl, s-butyl, t-butyl, 1-pentyl, 2-pentyl, 3-pentyl, i-pentyl, neo-pentyl, t-pentyl, 1-hexyl, 2-hexyl, 3-hexyl, 1-methyl-1-ethyl-n-pentyl, 1,1,2-tri-methyl-n-propyl, 1,2,2-trimethyl-n-propyl, 3,3-dimethyl-n-butyl, 1-heptyl, 2-heptyl, 1-ethyl-1,2-dimethyl-n-propyl, 1-ethyl-2,2-dimethyl-n-propyl, 1-octyl, 3-octyl, 4-methyl-3-n-heptyl, 6-methyl-2-n-heptyl, 2-propyl-1-n-heptyl, 2,4,4-trimethyl-1-n-pentyl, 1-nonyl, 2-nonyl, 2,6-dimethyl-4-n-heptyl, 3-ethyl-2,2-dimethyl-3-n-pentyl, 3,5,5-trimethyl-1-n-hexyl, 1-decyl, 2-decyl, 4-decyl, 3,7-dimethyl-1-n-octyl, 3,7-dimethyl-3-n-octyl.

As used herein, the term aryl refers to a polyunsaturated, aromatic hydrocarbyl group having a single ring (i.e. phenyl) or multiple aromatic rings fused together (e.g. naphtyl) or linked covalently, typically containing 6 to 40 carbon atoms, preferably 6 to 20 carbon atoms, wherein at least one ring is aromatic. Non-limiting examples of aryl comprise phenyl, biphenylyl, biphenylenyl, tetralinyl, azulenyl, naphthalenyl, indenyl, acenaphtenyl, phenanthryl, indanyl, pyrenyl. The term "aryl" encompasses aryl substituted by one or more substituent(s).

As used herein, the term cycloalkenyl refers to unsaturated monocyclic hydrocarbons having one endocyclic double bond.

Whenever the term "substituted" is used in the present invention, it is meant to indicate that one or more hydrogen on the atom indicated in the expression using "substituted" is replaced with a selection from the indicated group, provided that the indicated atom's normal valence is not exceeded, and that the substitution results in a chemically stable compound, i.e. a compound that is sufficiently robust to survive isolation to a useful degree of purity from a reaction mixture. Substituents may be selected from the group comprising halogen, amino, heterocycle, amido, ether, ester, cyano, oxy derivative.

The term "halogen" as used herein refers to F, Cl, Br, or I. The term "cyano" as used herein refers to the group -CN. The term "amido" as used herein refers to the group - C(O)-NR^{a}R^{b} or -N(R^{a})-C(O)-R^{b} wherein R^{a} and R^{b} independently represents hydrogen, C₃-C₁₀ cycloalkyl, C₆-C₁₈ aryl, C₁-C₁₅ alkyl, C₃-C₁₀ heterocycle, C₂-C₁₅ alkenyl, C₂-C₁₅ alkynyl, or R^{a} and R^{b} are taken together with the nitrogen atom to which they are attached to form a three to ten membered N-heterocycle. The term "cycloalkyl" as used herein is a monovalent, saturated hydrocarbyl group having 1 or 2 cyclic structure. Cycloalkyl includes all saturated hydrocarbon groups containing 1 to 2 rings, including monocyclic or bicyclic groups. The term "heterocycle", as used herein as a substituent is defined as including an aromatic or non aromatic cyclic alkyl, alkenyl, aryl or alkynyl moiety as defined herein, having at least one O, P, S and/or N atom interrupting the carbocyclic ring structure. The term "ester" refers to the group -C(O)-O-R^{c} or -O-C(O)-R^{C} wherein R^{c} represents a moiety selected from the group consisting of hydrogen, C₃-C₁₀ cycloalkyl, C₆-C₁₈ aryl, C₁-C₁₅ alkyl, C₃-C₁₀ heterocycle, C₂-C₁₅ alkenyl, C₂-C₁₅ alkynyl. The term "oxy derivative", as used herein refers to -O-R^{c} groups wherein R^{c} is as defined above. The term "amino" by itself or as part of another substituent refers to a group of formula -N(R^{a})(R^{b}) wherein R^{a} and R^{b} are as defined above. The term "ether" is defined as including a group selected from C₁-C₅₀ straight or branched alkyl, or C₂-C₅₀ straight or branched alkenyl or alkynyl groups or a combination of the same, interrupted by one or more oxygen atoms. The term "alkenyl" as used herein, is defined as including both branched and unbranched, unsaturated hydrocarbon radicals having at least one double bond. The term "alkynyl" as used herein, is defined as including a monovalent branched or unbranched hydrocarbon radical containing at least one carbon-carbon triple bond. The term "three- to thirty-membered ring" as used herein refers to a three to thirty-membered carbocyclic ring structure interrupted by Z as defined herein, i.e. Z is carbon, silicon, germanium or tin atom.

In a first aspect, the present invention relates to a process for producing a copolymer comprising contacting into a reactor:
(A) a monomer selected from the group consisting of C₂ to C₁₀ olefins, and
(B) 1 to 50 mol% of 3-methyl-1-butene calculated on the basis of the total amount of component (A) and (B) in the feed, in presence of,
(C) a catalyst system comprising:
   (a) one or more metallocene compound of formula (I) or (II): 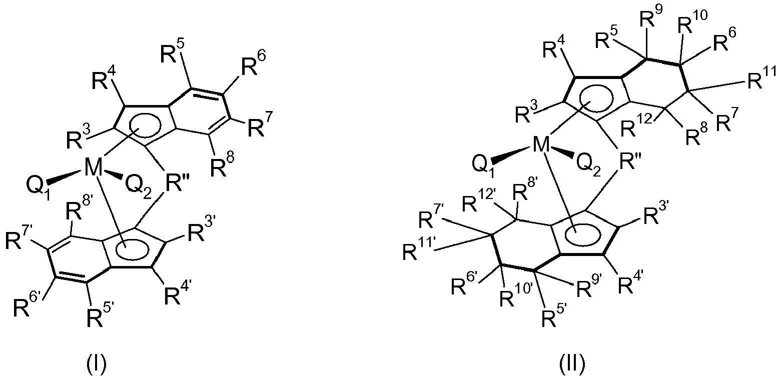 wherein:
      M is a group IV transition metal, preferably zirconium, hafnium or titanium;
      Q¹ and Q² are identical or different and are independently selected from the group consisting of hydrogen, halogen, C₁-C₁₀ alkyl group, C₆-C₂₀ aryl group, an anionic ligand or a neutral ligand capable of coordination by a lone pair of electrons;
      R" is of formula -[Z(R¹)(R²)]ₙ-
      n is an integer between 1 and 5;
      Z is a carbon, silicon, germanium or tin atom;
      R¹ and R² are identical or different and are independently selected from the group consisting of hydrogen, C₁-C₃₀ alkyl groups optionally substituted by one or more substituents, C₆-C₄₀ aryl groups optionally substituted by one or more substituents, or
      R¹ and R² together with the atom Z to which they are attached can form a three- to thirty-membered ring optionally substituted by one or more substituents;
      R³ to R¹² and R^{3'} to R^{12'} are identical or different and are independently selected from the group consisting of hydrogen, C₁-C₃₀ alkyl groups optionally substituted by one or
      more substituents, C₆-C₄₀ aryl groups optionally substituted by one or more substituents, or two of the substituents R³ to R¹² or R^{3'} to R^{12'} attached to a carbon atom positioned vicinal to each other respectively, form with the carbon atom to which they are attached a cycloalkyl, cycloalkenyl or aryl group optionally substituted by one or more substituents,
      with the proviso that in formula (I) R³ to R⁸ and R^{3'} to R^{8'} are not simultaneously hydrogen when Z is a carbon atom and n is 1; and that in formula (I) R³ and R⁴ as well as R^{3'} and R^{4'} together with the carbon atom to which they are attached do not form a cycloalkenyl group or an aryl group when Z is a silicon or carbon atom;
   (b) at least one activating agent having an alkylating or ionising action, and
   (c) optionally a scavenger selected from the group consisting of alkyl aluminium represented by formula AlR*ₙX₃₋ₙ wherein R* is an alkyl having from 1 to 20 carbon atoms, n is an integer between 0 and 3 and X is a halogen; or aluminoxane.

In a preferred embodiment, the activating agent is selected from alkyl aluminium, alumoxanes and boron-containing compounds.

The activating agent can be an alkyl aluminium represented by formula AlR*ₙX₃₋ₙ wherein R* is an alkyl having from 1 to 20 carbon atoms, n is an integer between 0 and 3 and X is a halogen. The preferred alkyl aluminium may be triisobutylaluminium (TIBAL) or triethylaluminium (TEAL). The alkyl aluminium can be used in combination with a perfluoroborate e.g. [Ph₃C][B(C₆F₅)₄] or [Me₂NPhH][B(C₆F₅)₄], which can be used to increase the molecular weight of the produced polyolefin. For example, using a combination of [Ph₃C][B(C₆F₅)₄]/TIBAL or of [Me₂NPhH][B(C₆F₅)₄]/TIBAL.

Suitable boron-containing agents may also be used for activating the metallocene compound to form a catalyst system. These include for example a triphenylcarbenium boronate such as tetrakis(pentafluorophenyl)borato-triphenylcarbenium as described in EP-A-0427696, or those of the general formula [L'-H]⁺[BAr¹Ar²X³X⁴]- as described in EP-A-0277004 (page 6, line 30 to page 7, line 7). The amount of boron-containing activating agent is selected to give a B/M ratio of from 0.5 to 5, preferably of about 1.

The activating agent may be aluminoxane and may comprise oligomeric linear and/or cyclic alkyl aluminoxanes represented by formula 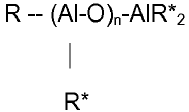 for oligomeric, linear aluminoxanes and by formula 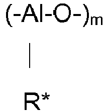 for oligomeric, cyclic aluminoxane, wherein n is 1-40, preferably 1-20, m is 3-40, preferably 3-20 and R* is a C₁-C₈ alkyl group and preferably methyl or isobutyl. Preferably, the activating agent is selected from methylaluminoxane (MAO) and ethylaluminoxane. More preferably the activating agent is MAO. The amount of activating agent is selected to give an Al/M ratio of 100 to 10000, preferably of 200 to 4000, more preferably from 500 to 3000, most preferably from to 1000 to 3000. The amount of activating agent depends upon its nature.

The catalyst system may comprise a scavenger that may be selected from the group consisting of alkyl aluminium represented by formula AlR*ₙX₃₋ₙ wherein R* is an alkyl having from 1 to 20 carbon atoms, n is an integer between 0 and 3 and X is a halogen; or aluminoxane. Said scavenger may be, for example, triethylaluminium, triisobutylaluminum, tris-n-octylaluminium, tetraisobutyldialuminoxane, diethylzinc, tris-n-hexyl aluminium, diethylchloroaluminum or MAO. Usually, the scavenger is added after activation of the catalyst with the activating agent. Preferably, the scavenger is different from the activating agent.

In another embodiment, the catalyst system according to the invention further comprises an inorganic support. The inorganic support may comprise talc, inorganic oxides, clays and clay minerals, ion-exchanged layered compounds, diatomaceous earth compounds, zeolites or a resinous support material, such as a polyolefin, for example. Specific inorganic oxides include silica, alumina, magnesia, titania and zirconia, for example. Preferably, the inorganic support may comprise silica and/or alumina. The inorganic support may comprise from 10 to 100 wt% of silica and/or preferably from 10 to 100 wt% of alumina.

Alternatively, the inorganic support may also be an activating support such as fluorinated alumina silica. Methods for preparing such inorganic supports are described WO 2007/127465 or WO2005/075525.

Preferably, the inorganic support is preimpregnated with MAO before adding the metallocene compound.

In a preferred embodiment, the catalyst system may be of formula (I), wherein R" is of formula -[Z(R¹)(R²)]ₙ-, Z is a carbon or silicon;
n is an integer between 1 and 5, preferably n is 1, 2 or 3, more preferably n is 1;

R¹ and R² are identical or different and are independently selected from the group consisting of hydrogen, C₁-C₃₀ alkyl groups optionally substituted by one or more substituents, C₆-C₄₀ aryl groups optionally substituted by one or more substituents; preferably R¹ and R² are identical or different and are independently selected from the group consisting of hydrogen, C₁-C₁₀ alkyl groups optionally substituted by one or more substituents and C₆-C₂₀ aryl groups optionally substituted by one or more substituents.

Preferably, in formula (I), R³ to R³ and R^{3'} to R^{8'} are identical or different and are independently selected from the group consisting of hydrogen, C₁-C₂₀ alkyl groups optionally substituted by one or more substituents, C₆-C₂₀ aryl groups optionally substituted by one or more substituents, or two of the substituents R³ to R⁸ or R^{3'} to R^{8'} each attached to a carbon atom positioned vicinal to each other respectively, form with the carbon atom to which they are attached a cycloalkyl, cycloalkenyl or aryl group optionally substituted by one or more substituents.

In a preferred embodiment, the metallocene compound may have a bis(indenyl) moieties each being substituted at position 2 and/or 4 by a substituent selected from the group consisting of C₁-C₃₀ alkyl or C₆-C₄₀ aryl groups, preferably C₁-C₁₀ alkyl or C₆-C₂₀ aryl groups. Preferably, the metallocene compound may be a C₂ or pseudo-C₂ symmetry metallocene catalyst.

Hence, the metallocene compound may be of formula (I) wherein:
R³, R^{3'}, R⁵ and R^{5'} are identical or different and selected from hydrogen, C₁-C₃₀ alkyl or
C₆-C₄₀ aryl groups optionally substituted by one or more substituents;
R⁴, R^{4'}, R⁶, R^{6'}, R⁷, R^{7'}, R⁸ and R^{8'} are hydrogen;
R" is of formula -[Z(R¹)(R²)]ₙ-, Z is a carbon or silicon; n is 1; R¹ and R² are identical and selected from the group consisting of hydrogen, C₁-C₁₀ alkyl groups optionally substituted by one or more substituents and C₆-C₂₀ aryl groups optionally substituted by one or more substituents.

More preferably, the metallocene compound may be of formula (I) wherein
R³, R^{3'}, R⁵ and R^{5'} are identical or different and selected from hydrogen, C₁-C₁₀ alkyl or C₆-C₂₀ aryl groups optionally substituted by one or more substituents;
R⁴, R^{4'}, R⁶, R^{6'}, R⁷, R^{7'}, R⁸ and R^{8'} are hydrogen;
R" is of formula -[Z(R¹)(R²)]ₙ-, Z is a carbon or silicon; n is 1; R¹ and R² are identical and selected from the group consisting of hydrogen, C₁-C₁₀ alkyl groups optionally substituted by one or more substituents and C₆-C₂₀ aryl groups optionally substituted by one or more substituents.

Most preferably, the metallocene compound may be

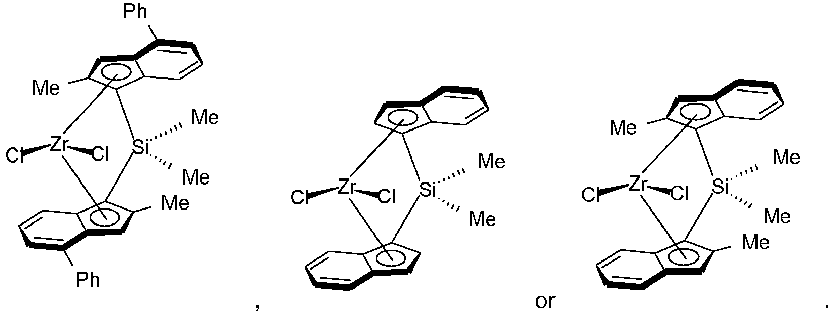

Alternatively, the metallocene compound may be of formula (II) wherein:
M is a group IV transition metal, preferably zirconium, hafnium or titanium;
Q¹ and Q² are identical or different and are independently selected from the group consisting of hydrogen, halogen, C₁-C₁₀ alkyl group, C₆-C₂₀ aryl group, an anionic ligand or a neutral ligand capable of coordination by a lone pair of electrons;
R" is of formula -[Z(R¹)(R²)]ₙ-
n is an integer between 1 and 5, preferably n is between 1 and 3, more preferably n is 1;
Z is a carbon, silicon, germanium or tin atom, preferably Z is carbon or silicon;
R¹ and R² are identical or different and are independently selected from the group consisting of hydrogen, C₁-C₃₀ alkyl groups optionally substituted by one or more substituents, C₆-C₄₀ aryl groups optionally substituted by one or more substituents, or R¹ and R² together with the atom Z to which they are attached can form a three- to thirty-membered ring optionally substituted by one or more substituents, preferably R¹ and R² are identical or different and are independently selected from the group consisting of hydrogen, C₁-C₃₀ alkyl groups optionally substituted by one or more substituents, C₆-C₄₀ aryl groups optionally substituted by one or more substituents, more preferably R¹ and R² are identical or different and are independently selected from the group consisting of hydrogen, C₁-C₁₀ alkyl groups optionally substituted by one or more substituents and C₆-C₂₀ aryl groups optionally substituted by one or more substituents;
R³ to R¹² and R^{3'} to R^{12'} are identical or different and are independently selected from the group consisting of hydrogen, C₁-C₃₀ alkyl groups, C₆-C₄₀ aryl groups optionally substituted by one or more substituents, or wherein two of the substituents R³ to R¹² or R^{3'} to R^{12'} attached to a carbon atom positioned vicinal to each other respectively, form with the carbon atom to which they are attached a cycloalkyl, cycloalkenyl or aryl group optionally substituted by one or more substituents, preferably R³ to R¹² and R^{3'} to R^{12'} are identical or different and are independently selected from the group consisting of hydrogen, C₁-C₂₀ alkyl groups optionally substituted by one or more substituents, C₆-C₂₀ aryl groups optionally substituted by one or more substituents, or two of the substituents R³ to R¹² or R^{3'} to R^{12'} each attached to a carbon atom positioned vicinal to each other respectively, can form with the carbon atom to which they are attached a cycloalkyl, cycloalkenyl or aryl group optionally substituted by one or more substituents.

In a preferred embodiment, the metallocene compound of formula (II) may have a bis(tetrahydroindenyl) moieties each being substituted at position 2 and/or 4 by one or more substituents selected from the group consisting of C₁-C₃₀ alkyl or C₆-C₄₀ aryl groups optionally substituted by one or more substituents, preferably C₁-C₁₀ alkyl or C₆-C₂₀ aryl groups optionally substituted by one or more substituents.

Hence, the metallocene compound may be of formula (II) wherein:
R³, R^{3'}, R⁵ and R^{5'} are identical or different and selected from hydrogen, C₁-C₃₀ alkyl or
C₆-C₄₀ aryl groups optionally substituted by one or more substituents;
R⁴, R^{4'}, R⁶, R^{6'}, R⁷, R^{7'}, R⁸, R^{8'}, R⁹, R^{9'}, R¹⁰, R^{10'}, R¹¹, R^{11'}, R¹² and R^{12'} are hydrogen;
R" is of formula -[Z(R¹)(R²)]ₙ-, Z is a carbon or silicon; n is 1; R¹ and R² are identical and selected from the group consisting of hydrogen, C₁-C₁₀ alkyl groups optionally substituted by one or more substituents and C₆-C₂₀ aryl groups optionally substituted by one or more substituents.

More preferably, the metallocene compound may be of formula (II) wherein
R³, R^{3'}, R⁵ and R^{5'} are identical or different and selected from hydrogen, C₁-C₁₀ alkyl or C₆-C₂₀ aryl groups optionally substituted by one or more substituents;
R⁴, R^{4'}, R⁶, R^{6'}, R⁷, R^{7'}, R⁸, R^{8'}, R⁹, R^{9'}, R¹⁰, R^{10'}, R¹¹, R^{11'}, R¹² and R^{12'} are hydrogen;
R" is of formula -[Z(R¹)(R²)]ₙ-, Z is a carbon or silicon; n is 1; R¹ and R² are identical and selected from the group consisting of hydrogen, C₁-C₁₀ alkyl groups optionally substituted by one or more substituents and C₆-C₂₀ aryl groups optionally substituted by one or more substituents.

Most preferably, the metallocene compound of formula (II) may be

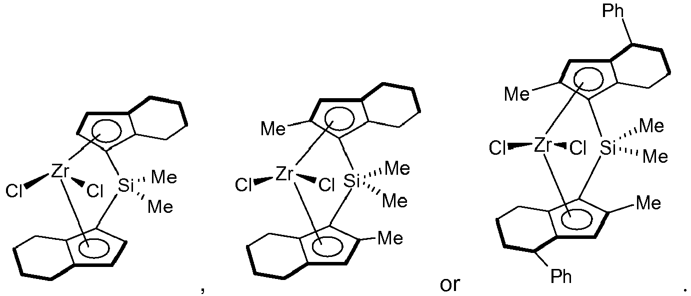

As mentioned above, the content of 3-methyl-1-butene in the feed may range from 1 to 50 mol%, preferably from 5 to 50 mol%, more preferably from 10 to 45 mol%, most preferably from 20 to 45 mol%.

The 3-methyl-1-butene content in the copolymer formed may preferably range from 0.1 to 15 mol%, more preferably from 0.5 to 15 mol%, most preferably from 2.0 to 13.0 mol%.

The main advantage of the catalyst and process of this invention is the high incorporation efficiency provided in the copolymerization of 3-methyl-1-butene (3MB1) and a C₂-C₁₀ olefin. The incorporation efficiency is defined as the ratio:
Incorporation Efficiency (IE) = [(mol% 3MB1 in copolymer) / (mol% 3MB1 in feed)]*100

The catalyst of the invention provides IE > 7% with ethylene as C₂-C₁₀ olefin even at low content of 3MB1 in the feed. Catalyst systems known in the art have never reached such high incorporation efficiency values at low 3MB1 content. Preferably, the present catalyst system provides IE with ethylene higher than 10%, more preferably higher than 15%, most preferably higher than 20% and in particular higher than 25%.

The catalyst of the invention also provides IE > 5% with propylene as C₂-C₁₀ olefin. These efficiencies are much higher than the one achieved by catalyst systems known in the art. Preferably, the present catalyst system provides IE with propylene higher than 8%, more preferably higher than 10%, most preferably higher than 15%.

These high incorporation efficiencies enable the use of 3-methyl-1-butene as comonomer on an industrially relevant scale as the volume of comonomers being recycled of during a polymerization process according to the present invention is substantially reduced, thus leading to important energy consumption reductions.

In a preferred embodiment, a prepolymerization of the catalyst with 3-methyl-1-butene and the monomer selected from the group consisting of C₂ to C₁₀ olefin is carried out. Said prepolymerization is performed at prepolymerization temperature lower than the polymerization temperature.

Preferably, said C₂-C₁₀ olefin is linear alpha-olefin, more preferably is ethylene, propylene or butene, most preferably is ethylene or propylene.

Optionally hydrogen can be added to control the molecular weight of the polyethylene or polypropylene. Also optionally, an anti-fouling agent can be added to the reactor.

The polymerisation process can be carried out in solution, in slurry or in gas phase. In a slurry process, the catalyst system is preferably supported. The slurry process can be carried out in a reactor suitable for such processes, such as continuously stirred tank reactors (CSTRs) or slurry loop reactors (in particular liquid full loop reactors).

Two or more reactors may be connected in series in order to produce bimodal copolymers. The pressure in the reactor can vary from 0.5 to 50 bars, preferably 5 to 25 bars, most preferably may be around 20 bars. The polymerisation temperature can vary from 0 to 100°C, preferably from 50 to 85°C. The amount of hydrogen, the temperature or the content of 3-methyl-1-butene in the feed can be different in each reactors. Preferably, the catalyst used in each reactor is the same. The short chain branching content of the copolymers produced in each reactor can be different as well as the molecular weight. Preferably, an overlap of the molecular weight distribution of copolymers produced in each reactor is obtained. The molecular weight distribution may range from 2 to 4 for the copolymer components produced in each reactor, and may range from 4 to 7 for the final copolymer produced. A difference in short chain branching content of the copolymers produced in each reactor can lead to the production of a first copolymer having high density and low content of 3-methyl-1-butene and of a second copolymer having low density and higher content of 3-methyl-1-butene.

In particular, the catalyst system of the invention is suitable for producing ethylene/3MB1 copolymers with 3MB1 contents in the copolymer of 0.1 to 20 mol%, preferably from 0.1 to 15 mol% for producing mLLDPE. Due to the high affinity of 3-methyl-1-butene with the catalyst system of the present invention, such contents of 3-methyl-1-butene incorporated can be obtained at a molar fraction of 3-methyl-1-butene in the feed from 1 to 50 mol%, preferably from 5 to 50 mol%, more preferably from 10 to 45 mol%, most preferably from 20 to 45 mol%.

Copolymers of 3-methyl-1-butene with linear C₂-C₁₀ olefin can be obtained with the present catalyst in the slurry, gas phase or solution phase, using a heterogeneous (supported) catalyst system or a homogeneous (unsupported) catalyst system. A diluent or solvent may be used in the present process. Said diluent or solvent may be a hydrocarbon, preferably a saturated hydrocarbon having from 4 to 12 carbon atoms, such as isobutane or hexane. Alternatively, said diluent or solvent may be unsaturated hydrocarbon such as toluene.

In a second aspect of the present invention, a copolymer of a monomer selected from C₂ to C₁₀ olefin with 3-methyl-1-butene as comonomer is provided. Said copolymer may be obtained by the process according to the present invention. Said copolymer may have 3-methyl-1-butene content of 0.1 to 20 mol%, preferably from 0.1 to 15 mol%. Said copolymer of the present may have melting point higher than the one of copolymer of the prior art at the same 3-methyl-1-butene content.

The copolymer according to the present invention may have density ranging from 0.860 to 0.960, preferably from 0.910 to 0.945, more preferably from 0.925 to 0.935.

The copolymer according to the present invention may have melt flow index (MI2 according to ASTM D 1238) ranging from 0.01 to 20, preferably from 0.05 to 30, more preferably from 0.1 to 1.5.

The copolymer according to the present invention may have a polydispersity index (molecular weight distribution Mw/Mn) from 1 to 7, preferably 2 to 6.

The ethylene/3-methyl-1-butene copolymers provided by this process display long chain branching (LCB) of 1 to 500 branches per 1 million carbon atoms, preferably 20 to 200 branches per 1 million carbon atoms, and more preferably 50 to 150 branches per 1 million carbon atoms. The content of long chain branching in the copolymer is also advantageous as it facilitates the processing properties of the copolymer, which in turn increases the processing speed and decreases energy consumption during processing.

The ethylene/3-methyl-1-butene copolymers produced with the process and catalysts according to the present invention may have physical and/or mechanical properties similar to ethylene/1-hexene copolymers. This ethylene/3-methyl-1-butene copolymer produced according to the present invention can be a valuable alternative to ethylene/1-hexene copolymers.

When the linear C₂-C₁₀ olefin is propylene, the resulting 3-methyl-1-butene-containing copolymer displays very high levels of tacticity higher than 90 % pentads as measured by high temperature ¹³C NMR spectroscopy, preferably higher than 95% pentads, more preferably higher than 97% pentads. Moreover, the tacticity as well as the molecular weight does not decrease at higher molar fractions of 3-methyl-1-butene in the feed. Indeed, as showed by the examples below, the tacticity is maintained when the molar fraction of 3-methyl-1-butene increases whilst the melting temperature of the resulting copolymer decreases. Preferably, the tacticity is higher than 98 % pentads at a content of 3-methyl-1-butene in the feed ranging from 1 to 50 mol%. The copolymer produced may be isotactic (*mmmm* pentads) or syndiotactic (*rrrr* pentads) depending of the metallocene compound used. For example, the resulting 3-methyl-1-butene-containing copolymer displays very high levels of tacticity higher than 90 % *mmmm* pentads as measured by high temperature ¹³C NMR spectroscopy, preferably higher than 95% *mmmm* pentads, more preferably higher than 97% *mmmm* pentads. As demonstrated in the examples below, isotacticity higher than 98% *mmmm* pentads can be obtained. Such high value of isotacticity was maintained whatever the content of 3-methyl-1-butene was.

A propylene/3-methyl-1-butene copolymer having tacticity values higher than 90% pentads, preferably higher than 95% pentads, and a content of 3-methyl-1-butene from 0.1 to 20 mol% in the copolymer is provided.

An ethylene/3-methyl-1-butene copolymer having a content of 3-methyl-1-butene from 2.0 to 13 mol% in the copolymer, a melting temperature higher than 105°C, preferably higher than 110°C, and a molecular weight distribution higher than 3, preferably higher than 5, is also provided.

### EXAMPLES

### Experimental procedure

Molecular weights (Mₙ, M_{w}) and polydispersity (D) were determined by Gel Permeation Chromatography (GPC) in trichlorobenzene at 145°C using a method based on ISO16014-4:2003 Polymer melting points were determined by differential scanning calorimetry (DSC) according to ISO 11357-1. Densities were determined according to ASTM D1505-85 using a pycnometer or calculated from the melting enthalpies determined by DSC using: Density (g/cm³) = 0.000427 × ΔHₘₑₗₜ(J/g) + 0.872. Bulk density (BD) was determined according to ASTM D1895. Melt flow indices MI2 and HLMI were determined according to ASTM D 1238-89. Shear ratio (SR) is defined as the ratio of HLMI/MI2. Comonomer incorporation (*x*_{comonomer} in mol%) was determined by quantitative high temperature ¹³C NMR spectroscopy and signals were attributed according to Derlin et al. Macromolecules 2007, 40, 4130-4137.

Long chain branching (LCB) was analyzed using melt-state rheology (RDA) using a Rheometric Scientific ARES rheometer. A sample (compression molded at 190°C) held between two 25 mm diameter plates; the gap between the plates is between 1 and 2 mm, and is thoroughly adapted according to the suitable thickness of the polymer sample once it has been inserted between the plates and heated up to 190°C. The gap value is then recorded to be taken into account by the calculation software. The sample is then temperature-conditioned for a period of 5 minutes before the measurement is started. The measurement is performed at 190°C. After temperature conditioning, the measurement starts by applying an oscillatory strain γ*(ω,t) = γ_{M}.e^{iωt}, with a given amplitude γ_{M} and a given frequency ω to the bottom plate via a precision motor, whereas the top plate is kept fixed. The amplitude γ_{M} of this shear strain has been chosen in the linear zone of viscoelasticity of the polymer and is kept constant through the whole experiment. The oscillation frequency ω is varied through the range [10⁻²-10⁺²] radians/second. The oscillating shear strain is translated inside the material into an oscillating shear stress σ*(ω,t), which in-phase and out-of-phase components are recorded as functions of the frequency ω, and used for the calculation of the complex modulus G*(ω) as well as complex viscosity η*(ω) of the polymer. The data is subsequently fit to the Carreau-Yasuda equation to determine the zero shear viscosity (see Bird et al. Dynamics of Polymeric Liquids, Vol. 1, Fluid Mechanics; John Wiley & Sons: New York, 1987). The degree of long chain branching was then determined by plotting the log zero shear viscosity (η₀) against log Mw in a Janzen-Colby plot (Janzen, J.; Colby, R. H. J. Mol. Struct. 1999, 485-486, 569-584).

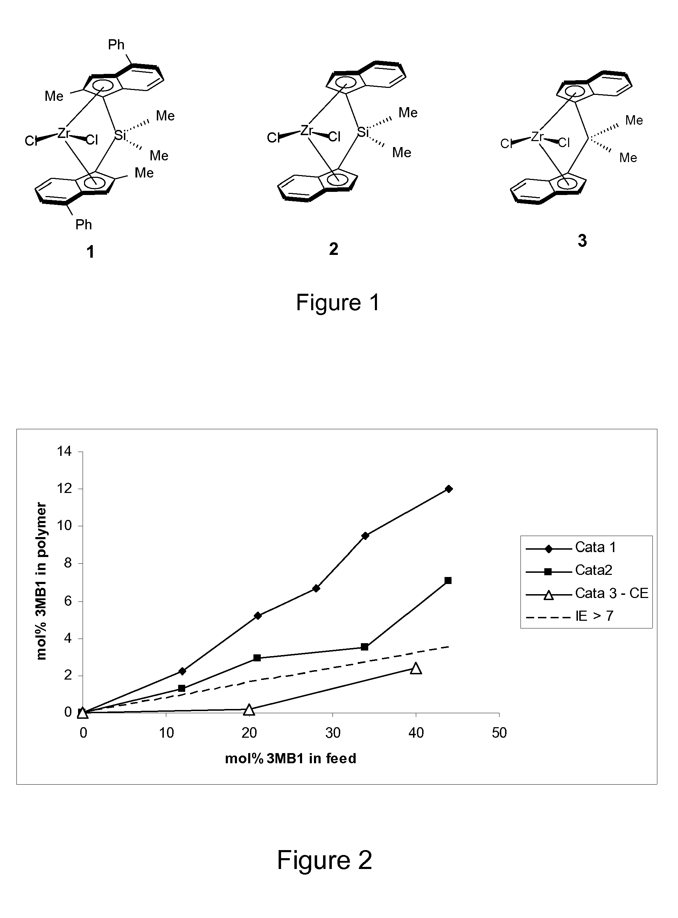

3-methyl-1-butene was supplied by TCI at 98.2 % GC purity and purified over 13X molecular sieves prior to polymerization experiments and stored below 4°C. Metallocene complexes **1** [Me₂Si(2-Me-4-Ph-Indenyl)₂ZrCl₂], and **2** [Me₂Si(Indenyl)₂ZrCl₂] were purchased from commercial suppliers and used as received (Figure 1). Solid catalyst **1**/SiO₂.MAO, which is based on 1.25 wt% of metallocene **1** supported on silica previously impregnated with MAO, was prepared according to the teachings of EP1291365B1.

### Examples 1-12 according to the present invention and comparative examples (CE) 13-16

Ethylene/3-methyl-1-butene (3MB1) copolymerization experiments were conducted in a computer-controlled parallel polymerization reactor equipped with 24 stainless steel reactors with 50 ml oven-dried glass inserts. To each glass insert was added subsequently under a nitrogen atmosphere a magnetic stirring bar, toluene solvent, catalyst stock solution, and the desired amount of 3MB1 at less than 4°C. The catalyst stock solution in toluene consisted of the corresponding metallocene complex activated by MAO (30 wt% solution in Toluene, Albemarle) at an Al/Zr ratio of 2000. The final concentration of the metallocene complex in the reactor was 8 µM at a total liquid volume of 20 ml. The glass inserts were capped with a septum and transferred into the parallel polymerization reactor pre-heated at 80°C. After a quick nitrogen purge, 20 bar ethylene was introduced and the reactors were magnetically agitated for 60 minutes at 1000 rpm. During this time the ethylene pressure was maintained at 20 bar using a pressure control valve. The polymerization was stopped by venting the reactor and adding a small amount of isopropanol to deactivate the catalyst. The resulting polymer suspensions were poured into aluminum trays and the solvent was allowed to evaporate in a ventilated fumehood overnight. The copolymer samples were further dried for more than 4 h under vacuum at 50 °C. The resulting dry products were weighed to determine catalyst activity and polymer analyses were performed. The results are summarized in Table 1 and the incorporation efficiencies are represented in Figure 2.

For comparative purposes ethylene/3MB1 copolymerization data obtained with metallocene 3 [Me₂C(Ind)₂ZrCl₂] reported in US8138293B2 and illustrated in Figure 1 are included in Table 1 and Figure 2.

**Table 1. Ethylene and 3-methyl-1-butene copolymerization with homogeneous metallocene catalysts.^{a}**

| Ex. | cat. | X_{3MB1} feed ^{e} | Activity^{c} | X_{3MB1} poly. ^{e} | IE (%) | Density (g/cm³) | Mₙ (kDa) | M_{w} (kDa) | D | Tₘ^{d} |
|---|---|---|---|---|---|---|---|---|---|---|
| 1 | **1** | 0 | 17.4 | 0.0 | n.a. | 0.935 | 109.8 | 371.8 | 3.4 | 132.1 |
| 2 | **1** | 12 | 11.8 | 2.2 | 18.3 | 0.926 | 55.6 | 280.3 | 5.1 | 126.7 |
| 3 | **1** | 21 | 11.6 | 5.2 | 24.8 | 0.916 | 17.6 | 103.0 | 6.0 | 120.3 |
| 4 | **1** | 28 | 13.7 | 6.7 | 23.9 | 0.911 | 15.4 | 86.0 | 5.7 | 119.9 |
| 5 | **1** | 34 | 13.9 | 9.5 | 27.9 | 0.920 | 12.5 | 72.5 | 6.0 | 120.0 |
| 6 | **1** | 44 | 12.5 | 12.0 | 27.3 | 0.910 | 11.3 | 70.4 | 6.3 | 115.5 |
| 7 | **2** | 00 | 12.2 | 0.0 | n.a. | 0.945 | 52.2 | 173.9 | 3.3 | 132.1 |
| 8 | **2** | 12 | 11.1 | 1.3 | 10.8 | 0.930 | 26.7 | 82.3 | 3.1 | 123.3 |
| 9 | **2** | 21 | 15.3 | 2.9 | 13.8 | 0.924 | 21.4 | 74.1 | 3.5 | 122.4 |
| 11 | **2** | 34 | 19.1 | 3.5 | 10.3 | 0.921 | 20.6 | 72.7 | 3.5 | 122.0 |
| 12 | **2** | 44 | 22.2 | 7.1 | 16.1 | 0.916 | 14.2 | 53.5 | 3.8 | 121.4 |
| CE 13*^{b}* | **3** | 0 | - | 0.0 | n.a. | - | 19.8 | 38.5 | 1.9 | 131.9 |
| CE 14*^{b}* | **3** | 20 | - | 0.2 | 1 | - | 23.8 | 44.4 | 1.9 | 123.1 |
| CE 15*^{b}* | **3** | 40 | - | 2.4 | 6 | - | 17.4 | 28.9 | 1.7 | 113.9 |
| *^{a}* Conditions: 20 ml total liquid volume, solvent = toluene, 20 bar C2, 80°C, 60 min polymerization run time. *^{b}* Comparative examples - data taken from US8138293B2. *^{c}* Activity is expressed as (kg PE mmol⁻¹ Zr h⁻¹). ^{d} Temperature is expressed in °C. ^{e} expressed as mol% | | | | | | | | | | |

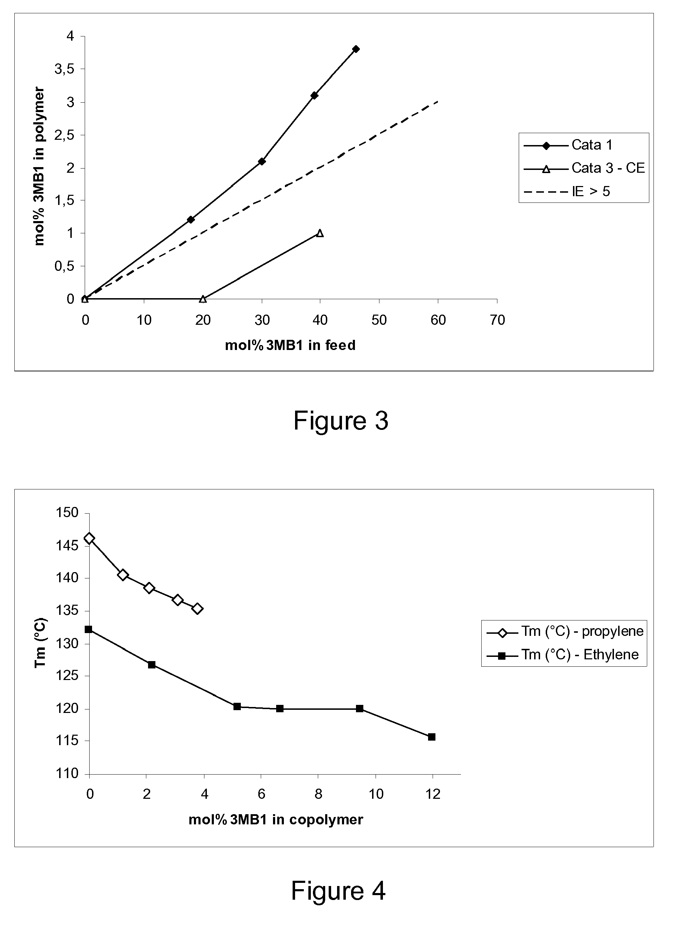

As demonstrated by the examples, the catalyst system according to the present invention provides high rate of incorporation of 3-methyl-1-butene in the copolymer compared with the prior art catalysts. Indeed, incorporation efficiency of 27.3% and 16.1% was obtained for catalysts 1 and 2 according to the present invention respectively while the comparative catalyst shows only an incorporation efficiency of 6%. The same effect is achieved when the olefin used in the copolymerization process is propylene as discussed below. The influence of the content of 3MB1 in the resulting ethylene copolymer on melting point is shown in Figure 4. It can be seen that melting point higher than 115.5°C can be obtained. Compared with the copolymers produced with the catalysts of the prior art, at the same content of 3MB1 in the copolymer, the copolymer according to the present invention has higher melting temperature and can be obtained at lower 3MB1 content in the feed. Indeed, US 8,202,959 discloses in table 9, a copolymer C₂/3MB1, produced with rac-[Me₂C(Ind)₂]ZrCl₂ at 40mol% 3MB1 in the feed, having 2.4 mol% of 3MB1 incorporated and a melting point of 113.9°C. As shown in Table 1, example 2, copolymer, having 2.2 mol% of 3MB1 and obtained at 12mol% 3MB1 in the feed, has a melting point of 126.7°C.

### Examples 13-17 according to the present invention and comparative examples (CE) 17-19

Propylene/3-methyl-1-butene (3MB1) copolymerization experiments were conducted in a computer-controlled parallel polymerization reactor equipped with 24 stainless steel reactors with 50 ml oven-dried glass inserts. To each glass insert was added subsequently under a nitrogen atmosphere a magnetic stirring bar, hexane solvent, triethylaluminum (75 µl of a 10 wt% solution in hexane), catalyst suspension, and the desired amount of 3MB1 at less than 4°C. The catalyst suspension in mineral oil consisted of solid catalyst 1/SiO₂.MAO. The final loading of the solid catalyst in the reactor was 3 mg at a total liquid volume of 20 ml. The glass inserts were capped with a septum and transferred into the parallel polymerization reactor pre-heated at 60°C. After a quick nitrogen purge, 0.8 NI hydrogen and 7 bar propylene were introduced and the reactors were magnetically agitated for 60 minutes at 1000 rpm. During this time the propylene pressure was maintained at 7 bar using a pressure control valve. The polymerization was stopped by venting the reactor and adding a small amount of isopropanol to deactivate the catalyst. The resulting polymer suspensions were poured into aluminum trays and the solvent was allowed to evaporate in a ventilated fumehood overnight. The copolymer samples were further dried for more than 4 h under vacuum at 50 °C. The resulting dry products were weighed to determine catalyst activity and polymer analyses were performed. The results are summarized in Table 2 and the incorporation efficiencies are represented in Figure 3. The influence of the content of 3MB1 in the resulting propylene copolymer on melting point is shown in Figure 4. At the same content of 3MB1 in the copolymer, higher melting point and/or tacticity are observed in copolymers according to the present invention. For comparative purposes propylene/3MB1 copolymerization data obtained with metallocene 3 [Me₂C(Ind)₂ZrCl₂] reported in US8138293B2 and illustrated in Figure 1 are included in Table 2 (comparative examples CE17-CE19) and Figure 3.

**Table 2. Copolymerization of propylene with 3MB1 using a supported metallocene catalyst. ^{a}**

| Ex. | X_{3MB1} feed ^{c} | Activity ^{b} | X_{3MB1} polymer ^{c} | IE (%) | Tₘ (°C) | M_{w} (kDa) | D | Tacticity ^{d} |
|---|---|---|---|---|---|---|---|---|
| 13 | 0 | 319 | 0.0 | 0 | 146.2 | 12.5 | 2.4 | 97.8 |
| 14 | 18 | 191 | 1.2 | 6.7 | 140.6 | 14.0 | 2.3 | 98.3 |
| 15 | 30 | 177 | 2.1 | 7.0 | 138.6 | 16.5 | 2.2 | 98.7 |
| 16 | 39 | 93 | 3.1 | 7.9 | 136.6 | 17.4 | 2.1 | 98.4 |
| 17 | 46 | 121 | 3.8 | 8.3 | 135.4 | 18.1 | 2.1 | 98.8 |
| CE17^{e} | 0 | - | 0 | n.a. | 133.9 | 9.3 | - | - |
| CE18^{e} | 20 | - | 0 | 0 | 130.3 | 8.2 | - | - |
| CE19^{e} | 40 | - | 1 | 2.5 | 125.1 | 8.1 | - | - |
| *^{a} Conditions:* 7 *bar C3, 0.8 NI H₂, 1h,* 3 mg *catalyst, 1000 rpm, 60°C, 75 µL* 10 *wt% TEAL, 20 ml total liquid volume, solvent* = hexane. *^{b} expressed in* (g PP/ (g cat x h)). ^{c} expressed in mol%. ^{d} expressed in % mmmm. ^{e} Comparative examples - data taken from US8138293B2. | | | | | | | | |

The catalyst according to the invention provides incorporation efficiency higher than the one of the prior art catalyst. Incorporation efficiency higher than 8% was obtained with the catalyst 1. The copolymer produced has high molecular weight and high isotacticity (higher than 97% mmmm pentads) as measured by high temperature ¹³C NMR spectroscopy (see Table 2). The tacticity was controlled by the catalyst of the present invention. A tacticity value between 98.3 and 98.8 was obtained with the present catalyst at a molar fraction of 3-methyl-1-butene in the feed between 18 and 46 mol%. The control of the tacticity with the catalyst system according to the present invention was completely unexpected based on the teaching of the prior art.

### Examples 18-23 according to the present invention

Ethylene/3-methyl-1-butene copolymerizations were conducted in a computer-controlled 4 litre bench-scale autoclave liquid-phase stainless-steel batch reactor. The reactor was clean, dry, and had been thoroughly purged with dry nitrogen. The autoclave was then charged with 2.0 litres of liquid isobutane and the desired amount of liquid 3MB1. The mixture was heated to 85°C and stirred at approximately 500 rpm. Ethylene containing 800-4500 ppmvol hydrogen was introduced to reach the desired concentration (for 6 wt%, 23.7 bar; for 3 wt%, 18.8 bar). Solid catalyst **1**/SiO₂.MAO (ca. 60 mg) was slurried in 5 ml of a 10 wt% triisobutylaluminum solution in hexane, and injected using pressurized nitrogen. In selected cases, the catalyst was injected into the reactor at a temperature of 40 °C, which was increased rapidly in 2 minutes to 85°C (prepolymerization). The reactor was maintained at 85°C and the desired ethylene pressure using a pressure control valve for 60 min. At the end of this time polymerization was terminated by rapidly venting the reactor. The resulting polymer was then separated followed by drying at 80°C. All results are summarized in Table 3.

**Table 3.* Copolymerization of ethylene with 3M81 using 1/SiO₂.MAO in a 41 bench reactor in isobutane at 85°C.**

| **Example** | **18** | **19** | **20** | **21** | **22** | **23** |
|---|---|---|---|---|---|---|
| **Prepolymerization** | No | No | No | Yes | Yes | Yes |
| **Run time (min)** | 60 | 60 | 60 | 60 | 60 | 120 |
| **Conc. C2 (wt%)** | 6 | 6 | 6 | 6 | 6 | 3 |
| **H₂ (ppmvol)** | 800 | 1600 | 3200 | 4500 | 4500 | 4500 |
| **3MB1 (ml)** | 40 | 40 | 40 | 40 | 80 | 80 |
| **X_{3MB1} in feed (wt%)** | 2.1 | 2.1 | 2.1 | 2.1 | 4.1 | 4.1 |
| **X_{3MB1} in feed (mol %)** | 12 | 12 | 12 | 12 | 22 | 36 |
| **Yield (g)** | 230 | 193 | 188 | 165 | 209 | 51 |
| **Activity (g/g/h)** | 3833 | 3216 | 3133 | 2750 | 3483 | 425 |
| **MI2 (dg/min)** | - | 0.028 | 0.174 | 0.572 | 0.591 | 0.094 |
| **HLMI (dg/min)** | 0.467 | 4.36 | 20 | 57.2 | 51.82 | 10.41 |
| **Shear ratio** | - | 156 | 115 | 100 | 88 | 111 |
| **BD (g/cm³)** | 0.45 | 0.46 | 0.49 | 0.46 | 0.48 | 0.37 |
| **D50 (µm)** | 504 | 356 | 360 | 348 | 362 | nd |
| **SPAN** | 4.24 | 0.82 | 1.50 | 1.02 | 1.01 | nd |
| **Density (g/cm³)** | 0.920 | 0.931 | 0.932 | 0.937 | 0.930 | 0.920 |
| **Mₙ (kDa)** | - | 21.4 | 17.8 | 15.1 | 17.5 | 27 |
| **M_{w} (kDa)** | - | 149.6 | 118.2 | 95.8 | 87.4 | 145.6 |
| **D** | - | 7 | 6.6 | 6.4 | 5 | 5.4 |
| **X_{3MB1} incorporation (wt%)** | 3.9 | 2.4 | 2.9 | 2.7 | 4 | 7.2 |
| **X_{3MB1} incorporation (mol%)** | 1.6 | 1 | 1.2 | 1.1 | 1.7 | 3 |
| **IE** | 13.3 | 8.3 | 10 | 9.1 | 7.7 | 8.3 |
| **Tₘ (°C)** | 115.4 | 120 | 120.3 | 121.4 | 119.5 | 110.1 |

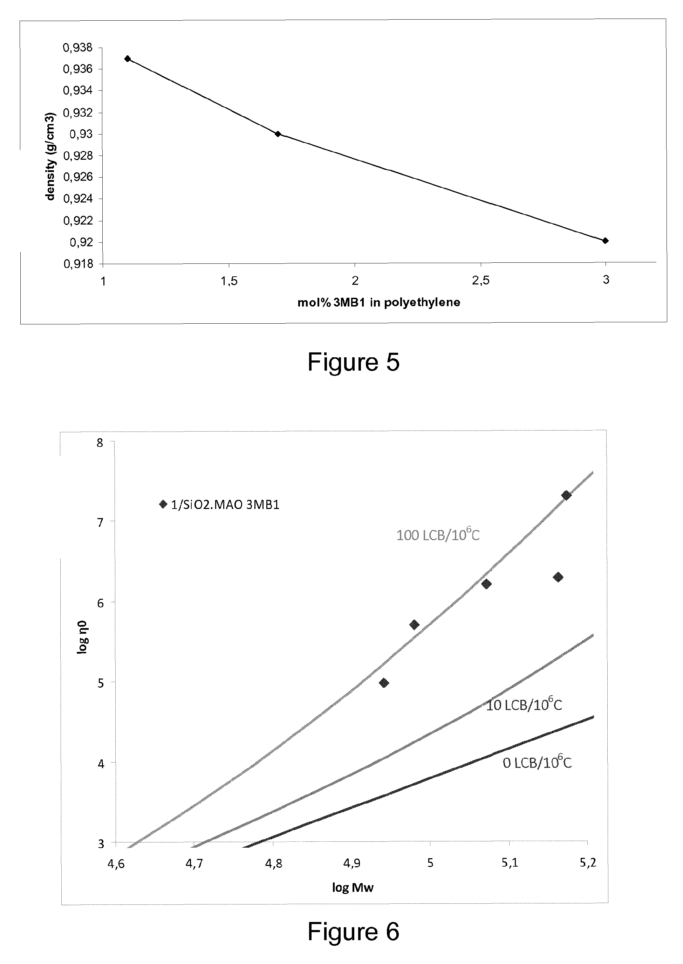

High incorporation efficiency values were obtained with the present catalyst even when deposited on an inorganic support. The content of hydrogen may influence the incorporation efficiency of the catalyst system. The incorporation efficiency decreases when the content of hydrogen increases. The influence of the amount of 3-methyl-1-butene incorporated in the copolymer formed on density thereof is represented in Figure 5. The density and the melting point of the copolymer decrease when the molar fraction of 3-methyl-1-butene in the feed increases. The optical properties, impact resistance and/or stress crack resistance of the copolymer are therefore enhanced.

Log zero shear viscosities of the copolymer resins determined by RDA are plotted versus log M_{w} in Figure 6 to establish the degree of LCB. Values ranging from 50 to 100 long chain branching per 10⁶ carbon atoms are obtained. The degree of long chain branching provided by the catalyst system according to the present invention makes the copolymer easy to process.

The present invention has been described in terms of specific embodiments, which are illustrative of the invention and not to be construed as limiting. More generally, it will be appreciated by persons skilled in the art that the present invention is not limited by what has been particularly shown and/or described hereinabove. Reference numerals in the claims do not limit their protective scope. Use of the verbs "to comprise", "to include", "to be composed of", or any other variant, as well as their respective conjugations, does not exclude the presence of elements other than those stated. Use of the article "a", "an" or "the" preceding an element does not exclude the presence of a plurality of such elements.

## Claims

1. A process for producing a copolymer comprising C₂-C₁₀ olefin as monomer and 3-methyl-1-butene as comonomer, said process comprising the step of contacting into a reactor:
(A) a monomer selected from the group consisting of C₂ to C₁₀ olefins, and
(B) 1 to 50 mol% of 3-methyl-1-butene calculated on the basis of the total amount of component (A) and (B) in the feed, in presence of,
(C) a catalyst system comprising:
(a) one or more metallocene compound of formula (I) or (II): 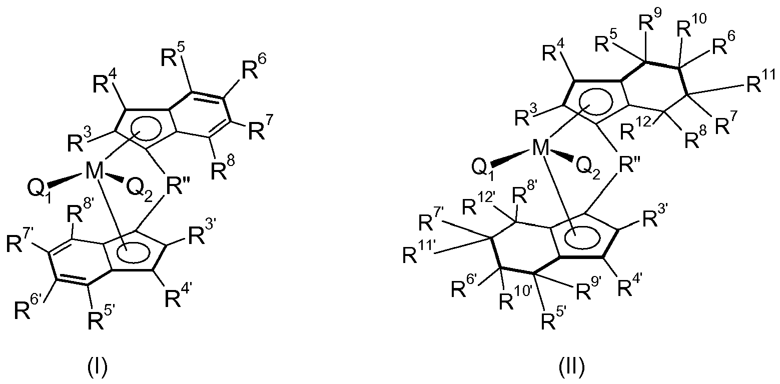 wherein:
M is a group IV transition metal, preferably zirconium, hafnium or titanium;
Q¹ and Q² are identical or different and are independently selected from the group consisting of hydrogen, halogen, C₁-C₁₀ alkyl group, C₆-C₂₀ aryl group, an anionic ligand or a neutral ligand capable of coordination by a lone pair of electrons;
R" is of formula -[Z(R¹)(R²)]ₙ-
n is an integer between 1 and 5;
Z is a carbon, silicon, germanium or tin atom;
R¹ and R² are identical or different and are independently selected from the group consisting of hydrogen, C₁-C₃₀ alkyl groups optionally substituted by one or more substituents, C₆-C₄₀ aryl groups optionally substituted by one or more substituents, or
R¹ and R² together with the atom Z to which they are attached form a three- to thirty-membered ring optionally substituted by one or more substituents;
R³ to R¹² and R^{3'} to R^{12'} are identical or different and are independently selected from the group consisting of hydrogen, C₁-C₃₀ alkyl groups optionally substituted by one or more substituents, C₆-C₄₀ aryl groups optionally substituted by one or more substituents, or two of the substituents R³ to R¹² or R^{3'} to R^{12'} attached to a carbon atom positioned vicinal to each other respectively, form with the carbon atom to which they are attached a cycloalkyl, cycloalkenyl or aryl group optionally substituted by one or more substituents,
with the proviso that in formula (I) R³ to R⁸ and R^{3'} to R^{8'} are not simultaneously hydrogen when Z is a carbon atom and n is 1; and that in formula (I) R³ and R⁴ as well as R^{3'} and R^{4'} together with the carbon atom to which they are attached do not form a cycloalkenyl group or an aryl group when Z is a silicon or carbon atom;
(b) at least one activating agent having an alkylating or ionising action, and
(c) optionally a scavenger selected from the group consisting of alkyl aluminium represented by formula AlR*ₙX₃₋ₙ wherein R* is an alkyl having from 1 to 20 carbon atoms, n is an integer between 0 and 3 and X is a halogen; or aluminoxane.

2. A process according to claim 1 wherein the catalyst system has an incorporation efficiency, defined as [the ratio of the molar percentage of 3-methyl-1-butene incorporated in the polymer to the content of 3-methyl-1-butene present in the feed expressed in mol%]*100, is higher than 7% when the C₂ to C₁₀ olefin is ethylene.

3. A process according to claim 1 wherein the catalyst system has an incorporation efficiency, defined as [the ratio of the molar percentage of 3-methyl-1-butene incorporated in the polymer to the content of 3-methyl-1-butene present in the feed expressed in mol%]*100, is higher than 5% when the C₂ to C₁₀ olefin is propylene.

4. A process according to any of the preceding claims wherein the catalyst system further comprises an inorganic support, preferably comprising silica and/or alumina.

5. A process according to any of the preceding claims wherein the activating agent is selected from alkyl aluminium, alumoxanes and boron-containing compounds.

6. A process according to any of the preceding claims, wherein the metallocene compound is of formula (I) or (II) wherein
R" is of formula -[Z(R¹)(R²)]ₙ-
Z is a carbon or silicon;
n is 1, 2 or 3;
R¹ and R² are identical or different and are independently selected from the group consisting of hydrogen, C₁-C₃₀ alkyl groups optionally substituted by one or more substituents, and C₆-C₄₀ aryl groups optionally substituted by one or more substituents; preferably R¹ and R² are identical or different and are independently selected from the group consisting of hydrogen, C₁-C₁₀ alkyl groups optionally substituted by one or more substituents, and C₆-C₁₀ aryl groups optionally substituted by one or more substituents.

7. A process according to any of the preceding claims, wherein the metallocene compound is of formula (I) wherein:
R³ to R⁸ and R^{3'} to R^{3'} are identical or different and are independently selected from the group consisting of hydrogen, C₁-C₂₀ alkyl groups optionally substituted by one or more substituents, C₆-C₂₀ aryl groups optionally substituted by one or more substituents, or
two of the substituents R³ to R³ or R^{3'} to R^{8'} each attached to a carbon atom positioned vicinal to each other respectively, form with the carbon atom to which they are attached a cycloalkyl, cycloalkenyl or aryl group optionally substituted by one or more substituents.

8. A process according to any of the preceding claims, wherein the metallocene compound is of formula (I) wherein
R³, R^{3'}, R⁵ and R^{5'} are identical or different and selected from hydrogen, C₁-C₃₀ alkyl or C₆-C₄₀ aryl groups optionally substituted by one or more substituents;
R⁴, R^{4'}, R⁶, R^{6'}, R⁷, R^{7'}, R⁸ and R^{8'} are hydrogen;
R" is of formula -[Z(R¹)(R²)]ₙ-, Z is a carbon or silicon; n is 1; R¹ and R² are identical and selected from the group consisting of hydrogen, C₁-C₁₀ alkyl groups and C₆-C₂₀ aryl groups.

9. A process according to any of the preceding claims, wherein the metallocene catalyst is

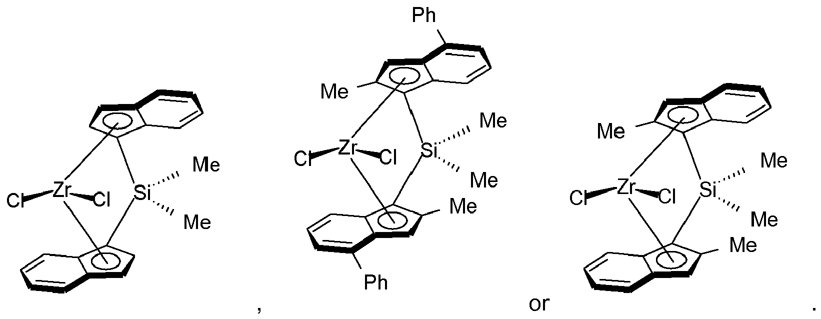

10. A process according to any of the preceding claims wherein said process is carried out in two or more reactors connected in series, each reactor containing:
(A) a monomer selected from the group consisting of C₂ to C₁₀ olefins, and
(B) 1 to 50 mol% of 3-methyl-1-butene calculated on the basis of the total amount of component (A) and (B) in the feed, in presence of,
(C) a catalyst system as defined in claim 1 to 9.

11. A process according to any of the preceding claims wherein the copolymer formed has 3-methyl-1-butene content ranging from 0.1 to 20 mol%, preferably from 2.0 to 13.0 mol%.

12. A process according to any of the preceding claims wherein the content of 3-methyl-1-butene in the feed ranges from 10 to 45 mol%.

13. A copolymer of C₂ to C₁₀ olefin with 3-methyl-1-butene obtained by the process according to any of the previous claims 1 to 12, said copolymer has 3-methyl-1-butene content ranging from 0.1 to 20 mol%.

14. A propylene / 3-methyl-1-butene copolymer having tacticity higher than 90% pentads, preferably higher than 95% pentads, and a content of 3-methyl-1-butene from 0.1 to 20 mol% in the copolymer.

15. An ethylene / 3-methyl-1-butene copolymer having a content of 3-methyl-1-butene from 2.0 to 13 mol% in the copolymer, a melting temperature higher than 105°C, preferably higher than 110°C, and a molecular weight distribution higher than 3, preferably higher than 5.
